# EUROPEAN PATENT APPLICATION

(11) **EP 3 974 052 A1**
(43) Date of publication of application: **30.03.2022**
(21) Application number: 20197715.4
(22) Date of filing: 23.09.2020
(51) Int. Cl.: B01J 8/10, B01J 19/00

(54) **VESSEL SYSTEM**

(71) Applicant: Basell Polyolefine GmbH, 50389 Wesseling (DE)
(72) Inventor: Caputo, Tiziana, 44122 Ferrara (IT); Baita, Pietro, 44122 Ferrara (IT); Di Diego, Maria, 44122 Ferrara (IT); Marturano, Lorella, 44122 Ferrara (IT); Mazzucco, Antonio, 44122 Ferrara (IT); Mei, Gabriele, 44122 Ferrara (IT); Mei, Giulia, 44122 Ferrara (IT); Pica, Roberta, 44122 Ferrara (IT)
(74) Representative: LyondellBasell

(57) **Abstract**

A vessel system for pre-activating a solid catalyst component comprising a contacting vessel comprising a main portion, an inlet and an outlet, and comprising one or more stirring means positioned within the contacting vessel, wherein the ratio (H/D) of the height (H) of the main portion to the diameter (D) of the main portion is 1.8 or greater and each of the stirring means is located at a position between the inlet and the outlet; and a process for preparing a pre-activated solid catalyst component for use in the polymerization of 1-olefins.

## Description

### FIELD OF THE INVENTION

The present disclosure relates to a vessel system for pre-activating a solid catalyst component, wherein said vessel system comprises a contacting vessel exhibiting a particular shape and dimensions and one or more stirring means positioned within said contacting vessel. The vessel system of the present disclosure finds use in processes for preparing pre-activated solid catalyst components, in particular pre-activated solid catalyst components used in the polymerization of one or more 1-olefins. Accordingly, the present disclosure further relates to a process employing the vessel system of the disclosure, said process being used to prepare a pre-activated solid catalyst component for subsequent use in the polymerization of one or more 1-olefins. A further aspect of the disclosure thus relates to such a process for polymerizing one or more 1-olefins, said process for polymerizing one or more 1-olefins employing a polymerization catalyst system that is prepared by a method comprising the aforementioned process of the disclosure for preparing said pre-activated solid catalyst component.

### BACKGROUND OF THE INVENTION

In the polymerization of 1-olefins (such as ethylene and propylene), in particular using Ziegler-Natta catalysts (in the field of ethylene polymerization also designated as Ziegler catalysts), the pre-activation of the catalyst component prior to performing the main polymerization process plays a pivotal role in maximizing the potential of the catalyst in terms of catalyst productivity and morphology of the obtained polyolefin particles. With increasing catalyst activity, less catalyst is needed which, in turn, leads to both economical benefits as well as a reduced level of catalyst-related residues in the polymeric product (i.e. increased purity of the polymeric product). An inadequate polymer morphology, especially a high amount of very small polymer particles may result in a poor reactor operability and in fouling in the polymerization reactor or in the recycle line.

A number of different strategies and techniques for the pre-activation of such catalyst components have been developed in the art. These may involve the contacting (also referred to as pre-contacting) of a solid catalyst component with an activating compound and, potentially, additional electron donor compounds such to create a pre-activated solid catalyst component which can subsequently be employed in the polymerization reaction. As described in, for example, WO 2014/184155 A1, an intermediate step of "pre-polymerization" of the pre-activated solid catalyst component may also be utilized such that a pre-polymerized activated catalyst is employed in the polymerization reaction. This may lead to overall improved operability (for instance, by reducing fouling of the reactor caused by the production of unwanted layers or lumps of material which, if the fouling becomes too severe, can result in that the process be stopped and the reactor cleaned before production can be commenced again).

Conventionally, such contacting of a solid catalyst component with an activating compound and, potentially, additional species such as electron donor compounds is performed in a vessel (which may also be referred to as a contacting vessel, contacting pot, precontacting vessel or precontacting pot, where the vessel is in the form of a continuous stirred tank. In such vessels, a single contacting stage (also designated as a precontacting stage) is realized. Such to increase the extent of pre-activation of the solid catalyst component, more than one contacting stage can be employed. This can be achieved, for example, by using two or more contacting vessels connected in series. Increasing the number of contacting stages reduces the proportion of unactivated solid catalyst component which is subsequently fed into the polymerization reactor (or, where employed, pre-polymerization reactor) and, in turn, improves, inter alia, the quality and morphology of the polymer product. However, even when using a series of two contacting vessels, there is still a proportion of solid catalyst components which is not pre-activated or only partly pre-activated. A solution to the issue could be to further increasing the number of contacting stages is associated with, inter alia, additional capital expenditure outlay associated both with the cost of multiple contacting vessels per se as well as with the space needed to accommodate said multiple vessels.

As such, there is a need to achieve in a limited number of contacting vessels an increased level of solid catalyst component pre-activation resulting in a higher productivity without sacrificing the morphology of the produced polyolefin particles.

### SUMMARY OF THE INVENTION

The present disclosure provides a vessel system for pre-activating a solid catalyst component, said vessel system comprising
(a) a contacting vessel, said contacting vessel comprising
   (i) a main portion, wherein said main portion is a vertically arranged cylinder;
   (ii) a base portion;
   (iii) a head portion;
   (iv) at least one inlet connecting the space outside the contacting vessel with the inside of the contacting vessel; and
   (v) at least one outlet connecting the inside of the contacting vessel with the space outside the contacting vessel;
   wherein the ratio (H/D) of the height (H) of the main portion to the diameter (D) of the main portion, calculated by dividing the height (H) by the diameter (D), is 1.8 or greater; and
(b) one or more stirring means positioned within said contacting vessel,
   wherein each of said (b) one or more stirring means is located at a position in the contacting vessel between the (iv) at least one inlet (6) and the (v) at least one outlet.

In some embodiments, the ratio (H/D) of the main portion to the diameter (D) of the main portion is from 1.8 to 15.

In some embodiments, the ratio (H/D) of the main portion to the diameter (D) of the main portion (3) is from 2.0 to 5.0.

In some embodiments, the height (H) of the main portion is from 100 mm to 20 000 mm.

In some embodiments, the diameter (D) of diameter (D) of the main portion), is from 20 mm to 5 000 mm.

In some embodiments, said (iv) at least one inlet and (v) at least one outlet are situated in the vessel in such a manner that a height differential in the vertical direction exists between their respective positions.

In some embodiments, said (iv) at least one inlet is positioned such that any material or fluid passed through said at least one inlet into said contacting vessel enters the contacting vessel at a point above the uppermost of the (b) one or more stirring means and wherein said (v) at least one outlet is positioned such that any material or fluid passed from the inside of the contacting vessel through said outlet exits the contacting vessel at a point below the lowermost of the (b) one or more stirring means.

In some embodiments, said (iv) at least one inlet is positioned such that any material or fluid passed through said at least one inlet into said contacting vessel enters the contacting vessel at a point below the lowermost of the (b) one or more stirring means and wherein said (v) at least one outlet is positioned such that any material or fluid passed from the inside of the contacting vessel through said outlet exits the contacting vessel at a point above the uppermost of the (b) one or more stirring means.

In some embodiments, each of said (iv) at least one inlet and (v) at least one outlet are vertically positioned in said contacting vessel in such a manner that any material or fluid passed through said (iv) at least one inlet into said contacting vessel and passing through said contacting vessel to said (v) at least one outlet passes along at least 75 %, preferably at least 80 %, more preferably at least 90 %, even more preferably at least 95 %, most preferably 100 % of the height of the (i) main portion prior to exiting said contacting vessel through said (v) at least one outlet.

In some embodiments, said stirring means are impellers.

In some embodiments, the contacting vessel further comprises one or more baffles.

In some embodiments, the present disclosure provides a process for preparing a pre-activated solid catalyst component for use in the polymerization of one or more 1-olefins, said process employing the vessel system of any of claims 1 to 11 and comprising the steps of
(i) continuously feeding into the (a) contacting vessel through the (iv) at least one inlet
   (i.i) a non-activated and/or partially activated solid catalyst component,
   (i.ii) at least one activating compound, wherein said
      at least one activating compound comprises an organometallic compound of an element of Group 1, 2, 12, 13, or 14 of the Periodic Table of Elements,
   (i.iii) a diluent,
   and optionally
   (i.iv) an external electron donor compound, and/or
   (i.v) an activity enhancer compound selected from the group consisting of halogenated alkanols, haloalkanes, halocycloalkanes, and any combination of any thereof;
(ii) passing the resultant mixture through the contacting vessel in the vertical direction to the (v) at least one outlet;
(iii) continuously removing through said (v) at least one outlet the mixture containing the pre-activated solid catalyst component.

In some embodiments, said pre-activated solid catalyst component is a said pre-activated solid catalyst component for use in a Ziegler-Natta polymerization.

In some embodiments, the present disclosure provides a process comprising polymerizing one or more 1-olefins in the presence of a polymerization catalyst system, wherein said polymerization catalyst system is prepared by a method comprising the process for preparing a pre-activated solid catalyst component in accordance with one or both of the above-identified embodiments of a process for preparing a pre-activated solid catalyst component.

In some embodiments, said one or more 1-olefins is selected from the group consisting of ethylene, propylene, 1-butene, 1-hexene, 1-octene, and any combination of any thereof.

### BRIEF DESCRIPTION OF THE DRAWINGS

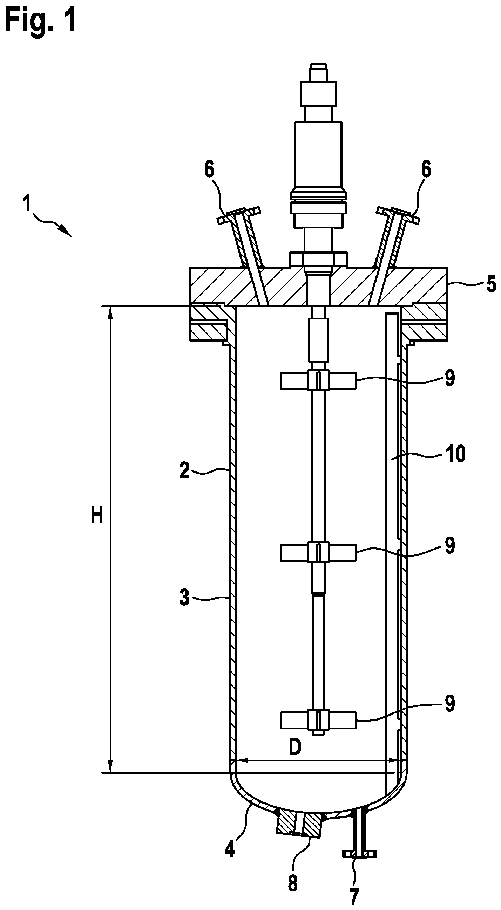

Figure 1 shows an embodiment of a vessel system of the present disclosure having a H/D ratio of the main portion (vertically arranged cylinder) of the contacting vessel of 2.8.

### DETAILED DESCRIPTION OF THE INVENTION

The present disclosure provides a vessel system in which, in a single contacting vessel, an increased number of theoretical contacting stages is realized, thus circumventing the necessity to employ multiple CVs and/or allowing an even greater level of solid catalyst component pre-activation to be realized upon using multiple vessel systems of the disclosure relative to that observed when using multiple conventional contacting vessels.

The present disclosure thus provides a vessel system (1) for pre-activating a solid catalyst component, said vessel system comprising
(a) a contacting vessel (2), said contacting vessel comprising
   (i) a main portion (3), wherein said main portion is a vertically arranged cylinder;
   (ii) a base portion (4);
   (iii) a head portion (5);
   (iv) at least one inlet (6) connecting the space outside the contacting vessel with the inside of the contacting vessel; and
   (v) at least one outlet (7) connecting the inside of the contacting vessel with the space outside the contacting vessel;
   wherein the ratio (H/D) of the height of said vertically arranged cylinder (H) to the diameter of said vertically arranged cylinder (D), calculated by dividing the height of said vertically arranged cylinder by the diameter of said vertically arranged cylinder, is 1.8 or greater; and
(b) one or more stirring means (9) positioned within said contacting vessel (2),
   wherein each of said (b) one or more stirring means (9) is locatedat a position in the contacting vessel between the (iv) at least one inlet (6) and the (v) at least one outlet (7).

A vessel system exhibiting each of the features of the vessel system of the present disclosure gives rise to a plug-flow through the contacting vessel in which, in contrast to conventional contacting vessels based on a continuous stirred tank design, more than one contacting stage is realised and a pre-activated solid catalyst component exhibiting an increased level/degree of activation (i.e. an increased proportion of material that has been successfully pre-activated) thus furnished.

The contacting vessel (2) of the vessel system of the present disclosure comprises a main portion (3), wherein said main portion is a vertically arranged cylinder. The ratio of the height of the vertically arranged cylinder (H) to the diameter of the vertically arranged cylinder (D) (also referred to as the height/diameter ratio or H/D ratio) is 1.8 or greater. In this context, the diameter of the vertically arranged cylinder is to be understood to be the internal diameter of the cylinder, i.e. not including the thickness of the cylinder walls. If this ratio is less than 1.8, only one contacting stage may be realized in the vessel which, in turn, may lead to little or no improvement in the proportion of material (solid catalyst component) that is successfully pre-activated relative to a pre-activated solid catalyst component prepared using a conventional contacting vessel. Although for the realization of the increased proportion of successfully pre-activated solid catalyst component observed using the vessel system of the present disclosure the upper limit of the H/D ratio is considered to be immaterial, mechanical considerations (for example, shaft stability, vibrations, mechanical integrity, etc.) may dictate that, for reasons of practicality, a certain upper value of the H/D ratio is, in practice, desirable. The H/D ratio is preferably from 1.8 to 15, more preferably from 2.0 to 5.0, and in particular from 2.5 to 3.5.

In preferred embodiments of the vessel system of the present disclosure, the height of the vertically arranged cylinder (H) of the contacting vessel (2) is from 100 mm to 20 000 mm. Said height is more preferably from 100 mm to 10 000 mm, even more preferably from 150 mm to 5 000 mm, especially preferably from 200 mm to 3 000 mm, and in particular from 250 mm to 2 000 mm. The diameter (D) of the vertically arranged cylinder of the contacting vessel (2) of the vessel system of the present disclosure is preferably from 20 mm to 5 000 mm, more preferably from 40 mm to 2 500 mm, even more preferably from 50 mm to 1 500 mm, especially preferably from 70 mm to 1 000 mm, and in particular from 75 mm to 750 mm.

Accordingly, the vertically arranged cylinder has preferably a height of from 100 mm to 20 000 mm, a diameter of from 20 mm to 5 000 mm, as well as an H/D ratio of 1.8 to 15; more preferably a height of from 100 mm to 10 000 mm, a diameter of from 40 mm to 2 500 mm, as well as an H/D ratio of 2.0 to 5.0; and in particular a height of from 250 mm to 2 000 mm, a diameter of from 40 mm to 2 500 mm, as well as an H/D ratio of 2.5 to 3.5.

The contacting vessel (2) of the vessel system of the present disclosure further comprises at least one inlet (6) connecting the space outside the contacting vessel with the inside of the contacting vessel, and at least one outlet (7) connecting the inside of the contacting vessel with the space outside the contacting vessel. The at least one inlet and at least one outlet are preferably situated in the vessel in such a manner that a height differential in the vertical direction exists between their respective positions. In a preferred embodiment, said at least one inlet (6) is positioned such that any material or fluid passed through said at least one inlet into said contacting vessel enters the contacting vessel at a point above the uppermost of the one or more stirring means (9) and said at least one outlet is positioned such that any material or fluid passed from the inside of the contacting vessel through said outlet (7) exits the contacting vessel at a point below the lowermost of the one or more stirring means (9). In this configuration, a so-called top-to-bottom flow of materials results. In this configuration, the at least one outlet may be positioned on said (ii) base portion (4). Furthermore, said at least one outlet may be positioned on said (ii) base portion in such a manner that any material or fluid passed from the inside of the contacting vessel through said at least one outlet can exit the contacting vessel with the same direction of flow with which it passed from said (iv) at least one inlet through said (i) main portion such to reach said (v) at least one outlet. Alternatively, said at least one outlet may be positioned on the (i) main portion (3) of the contacting vessel (2).

Alternatively yet still within the context of the foregoing, in one embodiment said at least one inlet (6) is positioned such that any material or fluid passed through said at least one inlet into said contacting vessel enters the contacting vessel at a point below the lowermost of the (b) one or more stirring means (9) and said at least one outlet is positioned such that any material or fluid passed from the inside of the contacting vessel through said outlet (7) exits the contacting vessel at a point above the uppermost of the (b) one or more stirring means (9). In this configuration, a so-called bottom-to-top flow of materials results. In this configuration, the at least one outlet (7) may be positioned on said (iii) head portion (5). Furthermore, said at least one outlet may be positioned on said (iii) head portion in such a manner that any material or fluid passed from the inside of the contacting vessel through said at least one outlet can exit the contacting vessel with the same direction of flow with which it passed from said (iv) at least one inlet through said (i) main portion such to reach said (v) at least one outlet. Alternatively, said at least one outlet (7) may be positioned on the (i) main portion (3) of the contacting vessel (2).

The contacting vessel (2) of the vessel system of the present disclosure may comprise a single inlet (6). Alternatively, the contacting vessel of the vessel system of the present disclosure may comprise more than one inlet. Depending on the chemistry to be performed in the contacting vessel, more than one inlet may, for practical reasons, be desired. For example, when pre-activating a solid catalyst component for subsequent use in the polymerization of one or more 1-olefins, in addition to the material(s) of the solid catalyst component itself, one or more activating compounds, one or more donor compounds (for example, one or more internal electron donor compounds and/or one or more external electron donors compounds), one or more activity enhancer compounds, one or more antistatic agents, and/or one or more diluents may be additionally employed. While each of these materials may be added to the contacting vessel through a single inlet, that the contacting vessel can be provided with one or more additional inlets. In preferred embodiments, the contacting vessel is provided with an inlet for each of the different materials to be employed in the contacting process.

In the context of the foregoing, it is preferred that the at least one inlet (6) and at least one outlet (7) are positioned in a manner relative to one another such that any material or fluid entering the contacting vessel by passing through the at least one inlet and subsequently exiting the contacting vessel through the at least one outlet passes along a minimum proportion of the height of the (i) main portion (3) of the contacting vessel. With regards to said minimum proportion of the height of the (i) main portion of the contacting vessel, each of said at least one inlet (6) and at least one outlet (7) may be vertically positioned in the contacting vessel in such a manner that any material or fluid passed through said (iv) at least one inlet into the contacting vessel and passing through the contacting vessel to said (v) at least one outlet passes along at least 75 % of the height of the (i) main portion (3) prior to exiting the contacting vessel through said (v) at least one outlet. Preferably, each of said at least one inlet (6) and at least one outlet (7) may be vertically positioned in the contacting vessel in such a manner that any material or fluid passed through said (iv) at least one inlet into the contacting vessel and passing through the contacting vessel to said (v) at least one outlet passes along at least 80 %, more preferably at least 90 %, even more preferably at least 95 %, most preferably 100 % of the height of the (i) main portion (3) prior to exiting the contacting vessel through said (v) at least one outlet.

The vessel system (1) of the present disclosure further comprises one or more stirring means (9) positioned within the contacting vessel (2). The stirring means are provided in order to enable mixing of any materials and fluids present in and/or passing through the contacting vessel (2). Preferably, the one or more stirring means positioned within the contacting vessel are arranged in such a manner as to ensure complete mixing of the components present throughout the entire (i) main portion. When more than one stirring means is present, there preferably exists a height differential in the vertical direction between each of said stirring means. When this is the case, a more consistent degree of mixing may be realized throughout the contacting vessel. Although the number and nature of the stirring means employed need only be selected such to achieve a desired level of mixing, in a typical embodiment from 2 to 15 stirring means (9) are positioned within the contacting vessel (2). In preferred embodiments, from 2 to 5, in particular from 2 to 4 stirring means are positioned within the contacting vessel. Within the context of the foregoing, when said (b) one or more stirring means positioned within said contacting vessel comprises three or more stirring means, the height differential in the vertical direction between any one of said stirring means and the next stirring means immediately adjacent thereto is preferably equal for each of said stirring means within the vessel. This leads to an even spacing of the stirring means throughout the vessel and may aid the realization of optimal (complete) mixing. The one or more stirring (9) means may be positioned within the contacting vessel (2) in such a manner as to rotate about an axis which is concentric with the vertical central axis of said (i) main portion (3).

The nature of the stirring means is not per se limited and any common stirring means used in the art may be employed to effect/facilitate the desired mixing in the contacting vessel of the vessel system of the present disclosure. Preferably, the stirring means employed is/are configured to produce tangential flow of the materials and fluids passing through the contacting vessel. The stirring means are in particular impellers. While, in this context, any kind of impeller (for example, upward orientated impellers, downward orientated impellers, flat-blade-type impellers, and the like) may be employed, flat-blade-type impellers may produce a greater degree of tangential flow and are thus preferred. When flat-blade-type impellers are employed, the number of blades present on each impeller may be selected such to ensure tangential flow of the specific materials at hand through the contacting vessel. In this context, each impeller preferably comprises 2 or more blades, in particular from 2 to 20 blades. Examples of flat-blade-type impellers used in certain embodiments of the present disclosure are those having 3 blades or 4 blades per impeller.

The contacting vessel (2) of the vessel system of the present disclosure further comprises a base portion (4) and a head portion (5). The base portion (4) is configured to provide the contacting vessel (2) with a lower surface and the head portion (5) to provide the contacting vessel with an upper surface such that, taken together with the main portion (3) which is a vertically arranged cylinder, a closed vessel results. Accordingly, the base portion (4) serves, inter alia, to close the vertically arranged cylinder of the main portion (3) at its lower end and the head portion (5) serves, inter alia, to close the vertically arranged cylinder at its upper end. Either or both of the head and base portions may be physically adjoined to the main portion in such a manner that the head and base portions cannot be separated from the main portion. For example, either or both of the head and base portions may form, together with the main portion, a single, continual physical entity. Alternatively, either or both of the head and base portions may be configured such to be detachable from the main portion. For example, the head portion may constitute a typical reactor vessel head such as those common in the art which can be detached from the remainder of the contacting vessel. In such a configuration, the base portion (4) of the contacting vessel may be connected to the main portion (3) of the contacting vessel in such a manner to form a single, continual physical entity (joining the opposing sides of the main portion to one another by way of a rounded surface) whilst the head portion (5) is a detachable reactor vessel head in which the inlets (6) are positioned.

In addition to the above-described features of the vessel system of the present disclosure, the contacting vessel (2) may further comprise one or more additional features common for being employed in reaction vessels in the art. For example, baffles may be used in reaction vessels such to improve turbulence and thus mixing. Accordingly, within the context of the foregoing and thus in any one of the embodiments described hereinabove, the contacting vessel may further comprise one or more baffles (10). Where one or more baffles (10) is present in the contacting vessel of the vessel system of the present disclosure, it is preferred that the one or more baffles are adjoined to the inner surface of the contacting vessel in a manner which minimizes dead space within the vessel. For example, each of the one or more baffles may be adjoined to the side wall of the vessel at one, two, or three points (this configuration may be used in large vessels) or, alternatively, adjoined to the inner surface of the head portion (this configuration may be used in small reaction vessels). A combination of baffles attached to the side wall of the vessel and to the inner surface of the head portion or any of the other various baffle constellations may also be employed.

Figure 1 shows an exemplary embodiment of a vessel system of the present disclosure. The vessel system (1) comprises a contacting vessel (2) having a main portion (3), a base portion (4), head portion (5). For connecting the space outside the contacting vessel with the inside of the contacting vessel, the contacting vessel (2) has two inlets (6), one outlet (7) and one emergency discharge outlet (8). The vessel system further exhibits three concentrically arranged stirring means (9) in the form of flat-blade-type impellers and a baffle (10) which is adjoined to the side wall of the vessel at three points.

Preferably, an element that allows the temperature within the contacting vessel to be controlled is employed in the contacting vessels of the present disclosure. Any such temperature control element may be employed in the vessel system of the present disclosure.

The vessel system (1) of the present disclosure may find use in any application in the art that is designed for species to be contacted. One such application are processes for preparing pre-activated solid catalyst components, in particular pre-activated solid catalyst components used in the polymerization of one or more 1-olefins. As alluded to above, in the polymerization of 1-olefins (such as ethylene and propylene), in particular using Ziegler-Natta catalysts, the pre-activation of the solid catalyst component prior to performing the main polymerization process plays a pivotal role in maximizing the potential of the catalyst in terms of catalyst productivity and morphology of the obtained polyolefin particles. Furthermore, with increasing catalyst activity, less catalyst is needed which, in turn, leads to both economical benefits as well as a reduced level of catalyst-related residues in the polymeric product. An inadequate polymer morphology, especially a high amount of very small polymer particles may result in a poor reactor operability and in reactor fouling. Thus, carrying out the pre-activation of the solid catalyst component in a contacting vessel according to the present disclosure may result in the subsequent polymerization process in higher catalyst mileage, lower catalyst incidence on the final polymer product cost, increased specific mileage, improved polymer morphology in terms of, for example, particle size distribution, a lower quantity of polymer particles of diameter below 180 µm (commonly referred to as "fines") and/or increased pour bulk density.

When used for the precontacting step in such a polymerization process (i.e. the step of pre-activating the solid catalyst component through a contacting step/process prior to subsequent use in a polymerization reaction), the vessel system of the present disclosure has the effect of producing in a single (pre)contacting vessel a pre-activated solid catalyst component which contains a greater proportion of successfully pre-activated material than were the same material to have been pre-activated under the same conditions but with the exception of the pre-activation having been performed in a conventional contacting vessel such as a continuous stirred tank.

Accordingly, a further aspect of the present disclosure relates to the use of any of the vessel systems disclosed herein for the preparation of a pre-activated solid catalyst component. In this regard, said pre-activated solid catalyst component is preferably prepared by contacting in said vessel (1) system a non-activated and/or partially activated solid catalyst component with at least one co-catalyst. Pre-activated solid catalyst components produced using the vessel systems disclosed herein are preferably solid catalyst components for the polymerization of one or more 1 olefins and are in particular solid catalyst components of Ziegler-Natta catalysts.

The pre-activated solid catalyst components that can be prepared using the vessel systems of the present disclosure include pre-activated solid catalyst components for use in the polymerization of 1-olefins. The vessel systems (1) of the present disclosure can thus be used to prepare pre-activated catalyst components, for example pre-activated Ziegler-Natta catalyst components, that can be employed in subsequent polymerization reactions to produce, for example, homopolymers or copolymers of 1-olefins. In this regard, the 1-olefins can be any 1-olefins but are preferably selected from the group consisting of ethylene, propylene, 1-butene, 1-hexene, 1-octene, and any combination of any thereof. By way of example, the vessel systems (1) of the present disclosure can be used to prepare pre-activated solid catalyst components for subsequent employment in the polymerization of ethylene. The polyethylene thus produced may be, for example, HDPE, or LLDPE. By way of further example, the vessel systems of the present disclosure can be used to produce pre-activated solid catalyst components for subsequent employment in the homopolymerization of propylene. The polypropylene thus produced may be, for example, propylene homopolymer, a propylene random copolymer or a heterophasic propylene copolymer. The vessel systems (1) of the present disclosure can also be used to prepare pre-activated solid catalyst components for subsequent employment in the copolymerization of ethylene and a further 1-olefin selected from the group consisting of propylene, 1-butene, 1-hexene, and 1-octene, and any combination of any thereof. The vessel systems (1) of the present disclosure can also be used to prepare pre-activated solid catalyst components for subsequent employment in the copolymerization of propylene and a further 1-olefin selected from the group consisting of ethylene, 1-butene, 1-hexene, 1-octene, and any combination of any thereof.

In order to further increase the proportion of solid catalyst component that is successfully pre-activated and thus improve still further the efficiency of the subsequent polymerization processes (and the properties of the polymers produced) in which the pre-activated solid catalyst component produced using the reaction vessels of the present disclosure are employed, it may be preferable to employ one or more (for example, two) of the vessel systems (1) of the present disclosure in series, whereby the pre-activated solid catalyst component produced in a given vessel system of the present disclosure (or mixture containing said pre-activated solid catalyst component obtained from the vessel system) is fed into a further vessel system of the present disclosure in which a second pre-activating, contacting step is performed.

As described above, the vessel system (1) of the present disclosure may be used in a process for preparing a pre-activated solid catalyst component, in particular a pre-activated solid catalyst component for subsequent use in the polymerization of one or more 1-olefins. As such, a further aspect of the present disclosure concerns a process for preparing a pre-activated solid catalyst component for use in the polymerization of one or more 1-olefins, said process employing the vessel system (1) of the present disclosure (i.e. any of the embodiments of the vessel system described herein throughout) and comprising the steps of
(i) continuously feeding into the (a) contacting vessel (2) through the (iv) at least one inlet (6)
   (i.i) a non-activated and/or partially activated solid catalyst component,
   (i.ii) at least one activating compound, wherein said
      at least one activating compound comprises an organometallic compound of an element of Group 1, 2, 12, 13, or 14 of the Periodic Table of Elements,
   (i.iii) a diluent,
   and optionally
   (i.iv) an external electron donor compound, and/or
   (i.v) an activity enhancer compound selected from the group consisting of halogenated alkanols, haloalkanes, halocycloalkanes, and any combination of any thereof;
(ii) passing the resultant mixture through the contacting vessel (2) in the vertical direction to the (v) at least one outlet (7);
(iii) continuously removing through said (v) at least one outlet (7) the mixture containing the pre-activated solid catalyst component.

In this context, it is preferred that during step (ii) said (i.i) non-activated and/or partially activated solid catalyst component, (i.ii) at least one activating compound, said (i.iii) diluent, and, where present, said (i.iv) external electron donor compound and/or said (i.v) said activity enhancer compound are contacted under agitation by the (b) one or more stirring means at a temperature of 0°C to 70°C, more preferably at a temperature of 15°C to 65°C and in particular at a temperature of 35°C to 55°C.

During step (ii), it is preferred that the mixture is passed through the contacting vessel (2) at such a rate that the residence time of the components (i.i), (i.ii), (i.iii) and, where present, (i.iv) and (i.v) in contact with one another in the contacting vessel is from 5 minutes to 5 hours, more preferably from 20 minutes to 4 hours and in particular from 30 minutes to 3 hours.

It is further possible to conduct the contacting components (i.i), (i.ii), (i.iii) and, where present, (i.iv) and (i.v) in two or more contacting vessels arranged in series. In such a case, the combined residence time of the components in all contacting vessels arranged in series is preferably from 5 minutes to 5 hours, more preferably from 20 minutes to 4 hours and in particular from 30 minutes to 3 hours.

The (i.i) non-activated and/or partially activated solid catalyst component may be any non-activated and/or partially activated solid catalyst component for use in the polymerization of one or more 1-olefins. The (i.i) non-activated and/or partially activated solid catalyst component preferably comprises a compound of titanium or a compound of vanadium; a compound of magnesium; and optionally an internal electron donor compound and/or an inorganic oxide support material. In preferred embodiments, the non-activated and/or partially activated solid catalyst component is obtained by contacting a compound of titanium; a compound of magnesium; and, where present, an internal electron donor compound and/or an inorganic oxide support material.

Within the context of the foregoing, in one embodiment the non-activated and/or partially activated solid catalyst component comprises a compound of titanium. As used throughout herein, the compound of titanium may be selected from the group consisting of halides of trivalent titanium, halides of tetravalent titanium, alkoxides of trivalent titanium, alkoxides of tetravalent titanium, alkoxy halogen compounds of trivalent titanium, alkoxy halogen compounds of tetravalent titanium, and any combination of any thereof. Examples of specific compounds of titanium include TiBr₃, TiBr₄, TiCl₃, TiCl₄, Ti(OCH₃)Cl₃, Ti(OC₂H₅)Cl₃, Ti(O-i-C₃H₇)Cl₃, Ti(O-n-C₄H₉)Cl₃, Ti(OC₂H₅)Br₃, Ti(O-n-C₄H₉)Br₃, Ti(OCH₃)₂Cl₂, Ti(OC₂H₅)₂Cl₂, Ti(O-n-C₄H₉)₂Cl₂, Ti(OC₂H₅)₂Br₂, Ti(OCH₃)₃Cl, Ti(OC₂H₅)₃Cl, Ti(O-n-C₄H₉)₃Cl, Ti(OC₂H₅)₃Br, Ti(OCH₃)₄, Ti(OC₂H₅)₄, Ti(O-n-C₄H₉)₄, and any combination of any thereof. The compound of titanium may comprise a halogen, in particular a chlorine atom. In a preferred embodiment, the titanium compound is a compound consisting of only trivalent- or tetravalent-titanium and halogen atoms, in particular trivalent- or tetravalent-titanium and chlorine atoms, and is most particularly titanium tetrachloride.

In one embodiment the non-activated and/or partially activated solid catalyst component comprises a compound of vanadium. As used throughout herein, the compound of vanadium may be selected from vanadium (III) compounds, vanadium (IV) compounds, vanadium (V) compounds, or any combination of any thereof. For example, the compound of vanadium may be selected from the group consisting of vanadium halides, vanadium oxyhalides, vanadium alkoxides, vanadium acetylacetonates, and any combination of any thereof.

Preferred compounds of magnesium comprised in the non-activated and/or partially activated solid catalyst component (i.i) are halogen-comprising magnesium compounds such as magnesium halides and in particular magnesium chlorides, magnesium bromides, and magnesium compounds from which magnesium halides can be obtained in a customary manner, e.g. through reaction with halogenating agents. For the present purposes, halogen-comprising magnesium compounds should be understood to mean magnesium compounds comprising chlorine, bromine, iodine, fluorine, or any combination of any thereof. In this context, particular preference is given to magnesium compounds comprising chlorine and/or bromine, in particular chlorine.

Possible halogen-comprising magnesium compounds are in particular magnesium chlorides or magnesium bromides. Examples of magnesium compounds from which magnesium halides can be obtained through, for example, reaction with halogenating agents include magnesium alkyls, magnesium aryls, magnesium alkoxy compounds, magnesium aryloxy compounds and Grignard compounds. Suitable halogenating agents are, for example, halogens, hydrogen halides, SiCl₄ or CCl₄, preferably chlorine or hydrogen chloride.

In this context, examples of suitable magnesium alkyls, magnesium aryls, magnesium alkoxy compounds, and magnesium aryloxy compounds include diethylmagnesium, di-n-propylmagnesium, diisopropylmagnesium, di-n-butylmagnesium, di-sec-butylmagnesium, di-tert-butylmagnesium, diamylmagnesium, n-butylethylmagnesium, n-butyl-sec-butylmagnesium, n-butyloctylmagnesium, diphenylmagnesium, diethoxymagnesium, di-n-propyloxymagnesium, diisopropyloxymagnesium, di-n-butyloxymagnesium, di-sec-butyloxymagnesium, di-tert- butyloxymagnesium , diamyloxymagnesium , n-butyloxyethoxymagnesium, n-butyloxy-sec-butyloxymagnesium, n-butyloxyoctyloxymagnesium and diphenoxymagnesium. Among these, preference is given to using n-butylethylmagnesium or n-butyloctylmagnesium.

Examples of suitable Grignard compounds include methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert- butylmagnesium bromide, hexylmagnesium chloride, octylmagnesium chloride, amylmagnesium chloride, isoamylmagnesium chloride, phenylmagnesium chloride, and phenylmagnesium bromide.

Within the context of the foregoing, the most preferred compounds of magnesium are magnesium dichloride, magnesium dibromide, and the di(C₁-C₁₀-alkyl)magnesium compounds (in particular those explicitly listed in the preceding paragraph). It is particularly preferred that the compound of magnesium comprises magnesium dichloride and, in this context, the compound of magnesium may be magnesium dichloride.

The non-activated and/or partially activated solid catalyst component may comprise an internal electron donor compound. It is preferred that the non-activated and/or partially activated solid catalyst component comprises an internal electron donor compound. It is preferred that the non-activated and/or partially activated solid catalyst component is obtained by contacting a compound of titanium; a compound of magnesium; an internal electron donor compound and, where present, an inorganic oxide support material. In the contexts in which the non-activated and/or partially activated solid catalyst component is obtained by such a contacting process (for example, in the embodiment in which a compound of titanium is used), it is thus preferred that an internal electron donor compound is employed.

The internal electron donor compounds fed into the contacting vessel can be any internal electron donor compound employed in catalysts used in the polymerization of 1-olefins. Preferred internal electron donor compounds are selected from the group consisting of alcohols, glycols, esters, ketones, amines, amides, nitriles, alkoxysilanes, aliphatic ethers, and any combination of any thereof. These electron donor compounds can be used alone or in mixtures with other electron donor compounds.

In the context of internal electron donor compounds, preferred alcohols are those of formula R¹OH in which the R¹ group is a C₁₋₂₀ hydrocarbon group. Preferably, R¹ is a C₁₋₁₀ straight chain or branched alkyl group. Specific examples thereof are methanol, ethanol, iso-propanol, n-butanol, and any combination of any thereof. Preferred glycols are those having a total number of carbon atoms lower than 50. Among these, particularly preferred are 1,2- or 1,3-glycols having a total number of carbon atoms lower than 25. Specific examples thereof are ethylene glycol, 1,2-propylene glycol, 1,3-propylene glycol, and any combination of any thereof. Preferred esters are alkyl esters of C₁₋₂₀ aliphatic carboxylic acids and in particular C₁₋₈ alkyl esters of aliphatic mono carboxylic acids such as ethyl acetate, methyl formate, ethyl formate, methyl acetate, propyl acetate, i-propyl acetate, n-butyl acetate, i-butyl acetate, and any combination of any thereof. Preferred amines are those of formula N(R²)₃ in which the R² groups are independently selected from hydrogen and a C₁₋₂₀ hydrocarbon group with the proviso that not all R² groups are hydrogen. Preferably, R² is a C₁₋₁₀ straight chain or branched alkyl group. Specific examples thereof are diethylamine, diisopropylamine, triethylamine, and any combination of any thereof. Preferred amides are those of formula R³CON(R⁴)₂ in which R³ and R⁴ are independently selected from hydrogen and a C1-20 hydrocarbon group. Specific examples thereof are formamide and acetamide. Preferred nitriles are those of formula R¹CN where R¹ is as defined above. A specific example thereof is acetonitrile. Preferred alkoxysilanes are those of formula (R⁵)ₐ(R⁶)_{b}Si(OR⁷)_{c}, where a is an integer from 0 to 2, b is an integer from 0 to 2, c is an integer from 1 to 4 and the sum (a+b+c) is 4; R⁵, R⁶, and R⁷, are each independently selected from the group consisting of C₁₋₁₈ alkyl, C₁₋₁₈ cycloalkyl, and C₁₋₁₈ aryl, wherein one or more carbon atoms in each alkyl, cycloalkyl or aryl group may optionally be replaced with a heteroatom (for example, O, N, or S). Particularly preferred are alkoxysilanes in which a is 0 or 1, c is 2 or 3, R⁶ is an C₁₋₁₈ alkyl or C₁₋₁₈ cycloalkyl group, wherein one or more carbon atoms in each alkyl or cycloalkyl group may optionally be replaced with a heteroatom (for example, O, N, or S), and R⁷ is methyl. Examples of such preferred alkoxysilanes are methyltrimethoxysilane, dimethyldimethoxysilane, trimethylmethoxysilane and t-butyltrimethoxysilane.

Especially preferred internal electron donor compounds are selected from the group consisting of esters, amides, alkoxysilanes, and any combination of any thereof, wherein said esters, amides and alkoxysilanes are as further described and defined in the preceding paragraph.

In order to obtain the non-activated and/or partially activated solid catalyst component, it is preferred that first the compound of magnesium and the compound of titanium are contacted, optionally in the presence of an inert diluent, in order to prepare an intermediate product containing a titanium compound supported on a magnesium halide, that, if desired, can also be isolated. Subsequently, where employed, the internal electron donor compound is contacted with this intermediate product whereby it may be added to the reaction mixture alone or in a mixture with other compounds. The reaction product can then be subjected to washing with a suitable solvent in order to recover a final non-activated and/or partially activated solid catalyst component. If needed, the treatment with the internal electron donor compound can be repeated a further one or more times.

The non-activated and/or partially activated solid catalyst component may also comprise an inorganic oxide support material. The inorganic oxide support material may be selected from the group consisting of silica gel, aluminum oxide, aluminosilicates, and any combination of any thereof and may be in particulate form. In one preferred embodiment, the non-activated and/or partially activated solid catalyst component is obtained by contacting a compound of titanium; a compound of magnesium; an internal electron donor compound and an inorganic oxide support material.

In the context of the present technology, the (i.ii) at least one activating compound may be any activating compound for use with a solid catalyst component for the polymerization of one or more 1-olefins. In the process of the present disclosure, the at least one activating compound comprises an organometallic compound of a metal of Group 1, 2, 12, 13, or 14 of the Periodic Table of Elements and preferably comprises an organometallic alkyl, organometallic alkoxide, organometallic halide, or any combination of any thereof. Preferred examples of such suitable compounds include lithium alkyls, magnesium alkyls, zinc alkyls, magnesium alkyl halides, aluminum alkyls, silicon alkyls, silicon alkoxides, silicon alkyl halides, and any combination of any thereof. Particularly preferred are activating compounds that comprise one or more organoaluminium compounds, such as aluminium alkyl compounds, in particular one or more aluminium alkyl compounds selected from trialkylaluminium compounds, alkylaluminium halides, alkylaluminium hydrides, alkylaluminium sesquichlorides, and any combination of any thereof, specific examples being trimethylaluminium, triethylaluminium, triisobutylaluminium, tri-n-butylaluminium tri-n-hexylaluminium, tri-n-octylaluminium, diethylaluminium chloride, diisobutylaluminium chloride, dimethylaluminium chloride, ethylaluminium sesquichloride, and any combination of any thereof.

As outlined above, a (i.iii) diluent is also continuously fed into the (a) contacting vessel through the (iv) at least one inlet. The diluent can be any substance which is liquid under the contacting conditions employed in the contacting vessel and which is inert, i.e. does not react with the components fed into the contacting vessel. Preferably, the diluent is a hydrocarbon. Examples of preferred diluents are propane, n-hexane, n-heptane, or any combination of any thereof, in particular propane. In this regard, exemplary contacting conditions under which propane is used as the diluent are a temperature of from -20°C to 60°C and a total pressure of 1.8 MPa or more. Here, and in the following, all pressure indications relate to absolute pressure.

As outlined above, a (i.iv) external donor compound may be continuously fed into the (a) contacting vessel through the (iv) at least one inlet. Where an external electron donor compound is employed in this manner, it can be any external electron donor compound for use in preparing pre-activated solid catalyst components for use in the polymerization of 1-olefins, in particular through the contacting of a non-activated and/or partially activated solid catalyst component with at least one activating compound. Preferably, said external electron donor compound is selected from the group consisting of alcohols, glycols, esters, ketones, amines, amides, nitriles, alkoxysilanes, aliphatic ethers, and any combination of any thereof. For example, tetrahydrofuran may be employed as an external electron donor in this context.

As outlined above, an (i.v) activity enhancer compound may be continuously fed into the (a) contacting vessel through the (iv) at least one inlet. Where an activity enhancer compound is employed in this manner in the present technology, it can be any activity enhancer compound suitable for/known in the art for use in preparing pre-activated solid catalyst components for use in the polymerization of 1-olefins, in particular through the contacting of a non-activated and/or partially activated solid catalyst component with at least one activating compound. In the process of the present disclosure, when an (i.v) activity enhancer compound is continuously fed into the (a) contacting vessel through the (iv) at least one inlet, said activity enhancer compound is selected from the group consisting of halogenated alkanols such as halogenated C₁-C₆ alkanols (e.g. trichloroethanol (TCEt)), haloalkanes such as halogenated C₁-C₆ alkanes, halocycloalkanes such as halogenated C₃-C₈ cycloalkanes (e.g. cyclohexyl chloride (CHC)), halogenated esters such as chloro esters (e.g. ethyl chloroacetate) and any combination of any thereof. Preferably, the halogen group(s) present in the activity enhancer compound is chlorine.

As mentioned hereinabove, the pre-activated solid catalyst components that can be prepared using the vessel systems of the present disclosure include pre-activated solid catalyst components for use in the polymerization of 1-olefins. The vessel systems of the present disclosure can thus be used to prepare pre-activated catalyst components, for example pre-activated Ziegler-Natta catalyst components, that can be employed to generate a polymerization catalyst system for the polymerization of one or more 1-olefins.

Accordingly, a further aspect of the present disclosure concerns a process for preparing a polymer, said process comprising polymerizing one or more 1-olefins in the presence of a polymerization catalyst system, wherein said polymerization catalyst system is prepared by a method comprising the process for preparing a pre-activated solid catalyst component according to any of the aforementioned embodiments of such a process of the present disclosure. In this context, the process can be carried out using all low-pressure polymerization methods at temperatures in the range from 20 to 200°C, preferably from 30 to 150°C and particularly preferably from 40 to 130°C, and under pressures of from 0.1 to 20 MPa and particularly preferably from 0.3 to 5 MPa. The polymerization can be carried out batchwise or preferably continuously in one or more stages. Solution processes, suspension processes, and gas-phase processes are all possible. Processes of this type are generally known to those skilled in the art. Among the polymerization processes mentioned, gas-phase polymerization, in particular in gas-phase fluidized-bed reactors or multizone circulating reactors, and suspension polymerization, in particular in loop reactors or stirred tank reactors, are preferred.

In a preferred embodiment of the present disclosure, the polymerization process is a suspension polymerization in a suspension medium, preferably in an inert hydrocarbon such as isobutane or mixtures of hydrocarbons or else in the monomers themselves. Suspension polymerization temperatures are usually in the range from 20 to 115°C, and the pressure is in the range of from 0.1 to 10 MPa. The solids content of the suspension is generally in the range of from 10 to 80 wt.%. The polymerization can be carried out both batchwise, e.g. in stirred autoclaves, and continuously, e.g. in tubular reactors, preferably in loop reactors. In particular, it can be carried out by the Phillips PF process as described in US 3,242,150 and US 3,248,179.

Suitable suspension media are all media which are generally known for use in suspension reactors. The suspension medium should be inert and be liquid or supercritical under the reaction conditions and should have a boiling point which is significantly different from those of the monomers and comonomers used in order to make it possible for these starting materials to be recovered from the product mixture by distillation. Customary suspension media are saturated hydrocarbons having from 4 to 12 carbon atoms, for example isobutane, butane, propane, isopentane, pentane and hexane, or a mixture of these, which is also known as diesel oil.

In a preferred suspension polymerization process, the polymerization takes place in a cascade of two or preferably three or four stirred vessels. The molecular weight of the polymer fraction prepared in each of the reactors is preferably set by addition of hydrogen to the reaction mixture. The polymerization process is preferably carried out with the highest hydrogen concentration and the lowest comonomer concentration, based on the amount of monomer, being set in the first reactor. In the subsequent further reactors, the hydrogen concentration is gradually reduced and the comonomer concentration is altered, in each case once again based on the amount of monomer. Ethylene or propylene is preferably used as monomer and a 1-olefin having from 4 to 10 carbon atoms is preferably used as comonomer.

A further preferred suspension polymerization process is suspension polymerization in loop reactors, where the polymerization mixture is pumped continuously through a cyclic reactor tube. As a result of the pumped circulation, continual mixing of the reaction mixture is achieved and the catalyst introduced and the monomers fed in are distributed in the reaction mixture. Furthermore, the pumped circulation prevents sedimentation of the suspended polymer. The removal of the heat of reaction via the reactor wall is also promoted by the pumped circulation. In general, these reactors consist essentially of a cyclic reactor tube having one or more ascending legs and one or more descending legs which are enclosed by cooling jackets for removal of the heat of reaction and also horizontal tube sections which connect the vertical legs. The impeller pump, the catalyst feed facilities and the monomer feed facilities and also the discharge facility, thus normally the settling legs, are usually installed in the lower tube section. However, the reactor can also have more than two vertical tube sections, so that a meandering arrangement is obtained.

Preferably, the suspension polymerization is carried out in the loop reactor at an ethylene concentration of at least 5 mole percent, preferably 10 mole percent, based on the suspension medium. In this context, suspension medium does not mean the fed suspension medium such as isobutane alone but rather the mixture of this fed suspension medium with the monomers dissolved therein. The ethylene concentration can easily be determined by gas-chromatographic analysis of the suspension medium.

In an especially preferred embodiment of the present disclosure, the polymerization process is carried out as gas-phase polymerization, i.e. by a process in which the solid polymers are obtained from a gas-phase of the monomer or the monomers. Such gas-phase polymerizations are usually carried out at pressures of from 0.1 to 20 MPa, preferably from 0.5 to 10 MPa and in particular from 1.0 to 5 MPa and polymerization temperatures from 40 to 150°C and preferably from 65 to 125°C.

Suitable gas-phase polymerization reactors are horizontally or vertically stirred reactor, fluidized bed gas-phase reactors or multizone circulating reactors and preferably fluidized bed gas-phase reactors or multizone circulating reactors.

Fluidized-bed polymerization reactors are reactors in which the polymerization takes place in a bed of polymer particles which is maintained in a fluidized state by feeding in gas at the lower end of a reactor, usually below a gas distribution grid having the function of dispensing the gas flow, and taking off the gas again at its upper end. The reactor gas is then returned to the lower end to the reactor via a recycle line equipped with a compressor and a heat exchanger. The circulated reactor gas is usually a mixture of the olefins to be polymerized, inert gases such as nitrogen and/or lower alkanes such as ethane, propane, butane, pentane or hexane and optionally a molecular weight regulator such as hydrogen. The use of nitrogen or propane as inert gas, if appropriate in combination with further lower alkanes, is preferred. The velocity of the reactor gas has to be sufficiently high firstly to fluidize the mixed bed of finely divided polymer present in the tube serving as polymerization zone and secondly to remove the heat of polymerization effectively. The polymerization can also be carried out in a condensed or super-condensed mode, in which part of the circulating reaction gas is cooled to below the dew point and returned to the reactor separately as a liquid and a gas-phase or together as a two-phase mixture in order to make additional use of the enthalpy of vaporization for cooling the reaction gas.

Multizone circulating reactors are gas-phase reactors in which two polymerization zones are linked to one another and the polymer is passed alternately a plurality of times through these two zones. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, preferably in the upper part of the downcomer. The barrier fluid should have a suitable composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore it is also possible to introduce make-up monomers, comonomers, molecular weight regulator such as hydrogen and/or inert fluids at any point of the downcomer, preferably below the barrier feeding point. Thus, it is also easily possible to create varying monomer, comonomer and hydrogen concentrations along the downcomer resulting in a further differentiation of the polymerization conditions.

The gas-phase polymerization processes according to the present disclosure are preferably carried out in the presence of a C₃-C₅ alkane as polymerization diluent and more preferably in the presence of propane, especially in the case of homopolymerization or copolymerization of ethylene.

The different or else identical polymerization processes can also, if desired, be connected in series and thus form a polymerization cascade. A parallel arrangement of reactors using two or more different or identical processes is also possible.

In a particularly preferred embodiment of the present disclosure, the polymerization of olefins is carried out in a reactor cascade of two or more gas-phase reactors. More preferably, the polymerization of olefins is carried out in a reactor cascade comprising a fluidized-bed reactor and a multizone circulating reactor. Preferably the fluidized-bed reactor is arranged upstream of the multizone circulating reactor. Such a reactor cascade of gas-phase reactors may also further comprise additional polymerization reactors. These additional reactors can be any kind of low-pressure polymerization reactors such as gas-phase reactors or suspension reactors and may also include a pre-polymerization stage.

The polymerization reaction is preferably a Ziegler-Natta polymerization. The pre-activated solid catalyst component may also be pre-polymerized prior to the polymerization reaction. Accordingly, the polymerization catalyst system may be prepared by a method comprising (i) the process for preparing a pre-activated solid catalyst component according to any of the embodiments described hereinabove, and (ii) pre-polymerizing the pre-activated solid catalyst component in the presence of one or more 1-olefins. Conditions for such a pre-polymerization step are well-known to the skilled person and may, for example, be any of those described in the specification or examples section of WO 2014/184155 A1, the content of which is incorporated herein by reference in its entirety.

The process is in particular suitable in the homopolymerization or copolymerization of ethylene or propylene and is especially preferred for the homopolymerization or copolymerization of ethylene. Preferred comonomers in propylene polymerization are up to 40 wt.% of ethylene and/or 1-butene, preferably from 0.5 wt.% to 35 wt.% of ethylene and/or 1-butene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to a process in which ethylene is copolymerized with from 0.1 wt.% to 12 wt.% of 1-hexene and/or 1-butene.

### EXAMPLES

The poured bulk density (PBD) was determined according to DIN EN ISO 60:2000-01.

The density of the obtained polyethylenes was determined according to DIN EN ISO 1183-1:2004, Method A (Immersion) with compression molded plaques of 2 mm thickness. The compression molded plaques were prepared with a defined thermal history: Pressed at 180°C, 20MPa for 8 min with subsequent crystallization in boiling water for 30 min.

The melt flow rate MFR_{2.16} was determined according to DIN EN ISO 1133:2005, condition D at a temperature of 190°C under a load of 2.16 kg.

The particle size distribution of the produced polyolefin particles was determined through the use of a Tyler Testing Sieve Shaker RX-29 Model B available from Combustion Engineering Endecott provided with a set of twelve sieves, according to ASTM E-11-87, of 106, 125, 180, 300, 500, 710, 1000, 1400, 2000, 2800, 3350, and 4000 µm. The average particle diameter was determined according to ASTM D1921.

### Example 1

A high density polyethylene (HDPE) was prepared in a fluidized-bed reactor having an internal diameter of 800 mm. For pre-activating the solid catalyst component, the fluidized-bed reactor was equipped with two identical contacting vessels as shown in Figure 1. The two contacting vessel were arranged in series. The diameter (D) of the main portions of the contacting vessels was 90 mm. The height (H) of the main portions of the contacting vessels was 250 mm, resulting in a ratio H/D of 2.8. The number of impellers was 3. The blade type was flat blade turbine.

A solid catalyst component was prepared in accordance with Example 6 of WO 2018/114453 A1. The accordingly prepared solid catalyst component was continuously fed into the first contacting vessel at a feeding rate of 28 g/h using liquid propane as a diluent. In addition, triethylaluminium (TEA) was continuously fed into the first contacting vessel as activating compound in an amount of 3 g/g of solid catalyst component. The temperature in the first contacting vessel was maintained at 50°C while continuously operating the impellers. The design of the contacting vessel allowed a complete mixing of the components although maintaining a plug-flow in the contacting vessel. The residence time in the first contacting vessel was 23 min.

The mixture discharged from the first contacting vessel was fed directly into the second contacting vessel. Additional liquid propane was fed into the second contacting vessel. The temperature in the second contacting vessel was maintained at 50°C while continuously operating the impellers. The design of the contacting vessels allowed a complete mixing of the component although maintaining a plug-flow in the contacting vessel. The residence time in the second contacting vessel was 21 min.

The mixture discharged from the second contacting vessel was fed to the fluidized bed reactor. Additionally, ethylene (as monomer), hydrogen, trichloroethanol (TCEt) as activity enhancer and an antistatic agent were fed into the fluidized bed reactor. The fluidized bed reactor was operated at 80°C at a pressure of 2.7 MPa. The further polymerization conditions are shown in Table 1 below.

The obtained HDPE homopolymer had a density of 0.970 g/cm³ and a melt flow rate MFR_{2.16} of 80 g/10 min. The production rate was 107 kg/h and the productivity of the solid catalyst component was 4 250 g polymer/g catalyst solid, corresponding to a specific mileage of 6 420 g/(g•h•MPa). The polymer particle morphology of the obtained HDPE powder can be seen in Table 1.

### Comparative Example A

The HDPE preparation of Example 1 was repeated under identical conditions, however two identical conventional contacting vessels arranged in series were used for pre-activating the catalyst solid. The diameter (D) of the main portions of the contacting vessels was 100 mm. The height (H) of the main portions of the contacting vessels was 160 mm, resulting in a ratio H/D of 1.6. The number of impellers was 2. Flat blade turbines were installed on the agitator.

The feeding rate of the solid catalyst component of the polymerization catalyst system into the first contacting vessel was 33 g/h. The temperature in the first contacting vessel was maintained at 50°C. Operating the impellers resulted in a homogeneous mixture of the components throughout the contacting vessel. The residence time in the first contacting vessel was 21 min.

The mixture discharged from the first contacting vessel was fed directly into the second contacting vessel. The temperature in the second contacting vessel was maintained at 50°C. Operating the impellers resulted in a homogeneous mixture of the components throughout the contacting vessel. The residence time in the second contacting vessel was 20 min.

The mixture discharged from the second contacting vessel was fed into the fluidized bed reactor. The fluidized bed reactor was operated at 80°C at a pressure of 2.7 MPa. The further polymerization conditions are shown in Table 1 below.

The obtained HDPE homopolymer had a density of 0.971 g/cm³ and a melt flow rate MFR_{2.16} of 80 g/10 min. The production rate was 107 kg/h and the productivity of the solid catalyst component was 3 240 g polymer/g catalyst solid, corresponding to a specific mileage of 5 360 g/(g•h•MPa). The properties of the produced polymer powder are shown in Table 1 below.

**Table 1**

| | Example 1 | Comparative Example A |
|---|---|---|
| TEA/catalyst solid [g/g] | 0.3 | 0.3 |
| TCEt/catalyst solid [g/g] | 0.15 | 0.15 |
| Residence time in FBR [h] | 2.5 | 2.8 |
| C₂ [mol%] | 9.8 | 8.0 |
| H₂/C₂ [mol/mol] | 2.4 | 2.4 |
| Antistatic agent/produced HDPE [ppm wt.] | 107 | 112 |
| Polymer powder fraction < 180 [wt.%] | 0.9 | 0.7 |
| D₅₀ [µm] | 1130 | 1100 |
| PBD [g/cm³] | 0.408 | 0.400 |

### Example 2

Example 1 was repeated, however a linear low density polyethylene (LLDPE) was prepared in the fluidized-bed reactor used in Example 1 being equipped with the two identical contacting vessels as shown in Figure 1.

A solid catalyst component of the polymerization catalyst system was prepared in accordance with Example 2 of WO 2012/025379 A1 using tetrahydrofuran (THF) as internal electron donor. The solid catalyst component had a THF content of 32.6 wt.%. The accordingly prepared solid catalyst component was continuously fed into the first contacting vessel at a feeding rate of 13 g/h using liquid propane as a diluent. Trihexylaluminium (THA) as a first activating compound and cyclohexyl chloride (CHC) as activity enhancer were continuously fed into the first contacting vessel. The temperature in the first contacting vessel was maintained at 40°C while continuously operating the impellers. The design of the contacting vessel allowed a complete mixing of the components although maintaining a plug-flow in the contacting vessel. The residence time in the first contacting vessel was 115 min.

The mixture discharged from the first contacting vessel was fed directly into the second contacting vessel. Additional liquid propane and diethylaluminium chloride(DEAC) as a second activating compound were fed into the second contacting vessel. The temperature in the second contacting vessel was maintained at 40°C while continuously operating the impellers. The design of the contacting vessel allowed a complete mixing of the components although maintaining a plug-flow in the contacting vessel. The residence time in the second contacting vessel was 60 min.

The mixture discharged from the second contacting vessel was fed to the fluidized bed reactor. Additionally, ethylene (as monomer), 1-butene (as comonomer), hydrogen, triethylaluminium (TEAL) as cocatalyst were fed into the fluidized bed reactor. The fluidized bed reactor was operated at 86°C at a pressure of 2.2 MPa. The further polymerization conditions are shown in Table 2 below. The feeding rates of DEAC, THA and TEAL were adjusted to have the ratios indicated below in Table 2 with respect to the THF comprised as internal donor in the solid catalyst component.

The obtained LLDPE homopolymer had a density of 0.920 g/cm³ and a melt flow rate MFR_{2.16} of 1.0 g/10 min. The production rate was 208 kg/h and the productivity of the solid catalyst component was 16 000 g polymer/g catalyst solid, corresponding to a specific mileage of 27 250 g/(g•h•MPa).

### Comparative Example B

The LLDPE preparation of Example 2 was repeated under identical conditions, however two identical conventional contacting vessels arranged in series as also used in Comparative Example A were used for pre-activating the catalyst solid.

The feeding rate of the solid catalyst component of the polymerization catalyst system into the first contacting vessel was 17 g/h. The temperature in the first contacting vessel was maintained at 40°C. Operating the impellers resulted in a homogeneous mixture of the components throughout the contacting vessel.

The mixture discharged from the first contacting vessel was fed directly into the second contacting vessel. The temperature in the second contacting vessel was maintained at 40°C. Operating the impellers resulted in a homogeneous mixture of the components throughout the contacting vessel.

The mixture discharged from the second contacting vessel was fed into the fluidized bed reactor. The fluidized bed reactor was opera operated at 86°C at a pressure of 2.2 MPa. The further polymerization conditions are shown in Table 2 below.

The obtained LLDPE homopolymer had a density of 0.918 g/cm³ and a melt flow rate MFR_{2.16} of 1.0 g/10 min. The production rate was 170 kg/h and the productivity of the solid catalyst component was 10 000 g polymer/g catalyst solid, corresponding to a specific mileage of 20 000 g/(g•h•MPa).

**Table 2**

| | Example 2 | Comparative Example B |
|---|---|---|
| DEAC/catalyst solid [g/g] | 0.25 | 0.23 |
| THA/catalyst solid [g/g] | 0.3 | 0.3 |
| TEA/catalyst solid [g/g] | 1.89 | 1.83 |
| Total alkyl/THF [mol/mol] | 4.4 | 4.2 |
| CHC/catalyst solid [g/g] | 0.075 | 0.075 |
| Residence time in FBR [h] | 1.2 | 1.3 |
| C₂ [mol%] | 22.6 | 17.5 |
| H₂/C₂ [mol/mol] | 0.14 | 0.12 |
| Bu/(Bu + C₂) [mol/mol] | 0.25 | 0.24 |

The comparisons of Example 1 with Comparative Example A and of Example 2 with Comparative Example B demonstrate that pre-activating the solid catalyst component in contacting vessels according to the present disclosure results in an improved productivity of the solid catalyst component at unchanged polymer properties without a deterioration in the morphology of the produced polyolefin particles.

## Claims

1. A vessel system (1) for pre-activating a solid catalyst component, said vessel system comprising
(a) a contacting vessel (2), said contacting vessel comprising
(i) a main portion (3), wherein said main portion is a vertically arranged cylinder;
(ii) a base portion (4);
(iii) a head portion (5);
(iv) at least one inlet (6) connecting the space outside the contacting vessel with the inside of the contacting vessel; and
(v) at least one outlet (7) connecting the inside of the contacting vessel with the space outside the contacting vessel;
wherein the ratio (H/D) of the height (H) of the main portion (3) to the diameter (D) of the main portion (3), calculated by dividing the height (H) by the diameter (D), is 1.8 or greater; and
(b) one or more stirring means (9) positioned within said contacting vessel (2),
wherein each of said (b) one or more stirring means (9) is located at a position in the contacting vessel between the (iv) at least one inlet (6) and the (v) at least one outlet (7).

2. The vessel system according to claim 1, wherein the ratio (H/D) of the main portion (3) to the diameter (D) of the main portion (3) is from 1.8 to 15.

3. The vessel system according to any of the preceding claims, wherein the ratio (H/D) of the main portion (3) to the diameter (D) of the main portion (3) is from 2.0 to 5.0.

4. The vessel system according to any of the preceding claims, wherein the height (H) of the main portion (3) is from 100 mm to 20 000 mm.

5. The vessel system according to any of the preceding claims, wherein the diameter (D) of diameter (D) of the main portion (3), is from 20 mm to 5 000 mm.

6. The vessel system according to any of the preceding claims, wherein said (iv) at least one inlet (6) and (v) at least one outlet (7) are situated in the vessel in such a manner that a height differential in the vertical direction exists between their respective positions.

7. The vessel system according to any of the previous claims, wherein said (iv) at least one inlet (6) is positioned such that any material or fluid passed through said at least one inlet into said contacting vessel enters the contacting vessel at a point above the uppermost of the (b) one or more stirring means (9) and wherein said (v) at least one outlet (7) is positioned such that any material or fluid passed from the inside of the contacting vessel through said outlet exits the contacting vessel at a point below the lowermost of the (b) one or more stirring means (9).

8. The vessel system according to any of claims 1 to 6, wherein said (iv) at least one inlet (6) is positioned such that any material or fluid passed through said at least one inlet into said contacting vessel enters the contacting vessel at a point below the lowermost of the (b) one or more stirring means (9) and wherein said (v) at least one outlet (7) is positioned such that any material or fluid passed from the inside of the contacting vessel through said outlet exits the contacting vessel at a point above the uppermost of the (b) one or more stirring means (9).

9. The vessel system according to any of the preceding claims, wherein each of said (iv) at least one inlet (6) and (v) at least one outlet (7) are vertically positioned in said contacting vessel in such a manner that any material or fluid passed through said (iv) at least one inlet into said contacting vessel and passing through said contacting vessel to said (v) at least one outlet passes along at least 75 %, preferably at least 80 %, more preferably at least 90 %, even more preferably at least 95 %, most preferably 100 % of the height of the (i) main portion (3) prior to exiting said contacting vessel through said (v) at least one outlet (7).

10. The vessel system according to any of the preceding items, wherein said stirring means (9) are impellers.

11. The vessel system according to any of the preceding claims, wherein the contacting vessel (2) further comprises one or more baffles (10).

12. A process for preparing a pre-activated solid catalyst component for use in the polymerization of one or more 1-olefins, said process employing the vessel system (1) of any of claims 1 to 11 and comprising the steps of
(i) continuously feeding into the (a) contacting vessel (2) through the (iv) at least one inlet (6)
(i.i) a non-activated and/or partially activated solid catalyst component,
(i.ii) at least one activating compound, wherein said
at least one activating compound comprises an organometallic compound of an element of Group 1, 2, 12, 13, or 14 of the Periodic Table of Elements,
(i.iii) a diluent,
and optionally
(i.iv) an external electron donor compound, and/or
(i.v) an activity enhancer compound selected from the group consisting of halogenated alkanols, haloalkanes, halocycloalkanes, and any combination of any thereof;
(ii) passing the resultant mixture through the contacting vessel (2) in the vertical direction to the (v) at least one outlet (7);
(iii) continuously removing through said (v) at least one outlet (7) the mixture containing the pre-activated solid catalyst component.

13. The process of claim 12, wherein said pre-activated solid catalyst component is a said pre-activated solid catalyst component for use in a Ziegler-Natta polymerization.

14. A process for preparing a polymer, said process comprising polymerizing one or more 1-olefins in the presence of a polymerization catalyst system, wherein said polymerization catalyst system is prepared by a method comprising the process for preparing a pre-activated solid catalyst component of claim 12 or 13.

15. The process of claim 14, wherein said one or more 1-olefins is selected from the group consisting of ethylene, propylene, 1-butene, 1-hexene, 1-octene, and any combination of any thereof.
